**Europäisches Patentamt**

**European Patent Office**

**Office européen des brevets**

(11) Veröffentlichungsnummer: **0 050 753**
**A1**

# EUROPÄISCHE PATENTANMELDUNG

(21) Anmeldenummer: **81107868.2**

(22) Anmeldetag: **02.10.81**

(51) Int. Cl.³: **H 02 M 7/48**

(30) Priorität: **28.10.80 DE 3040556**

(43) Veröffentlichungstag der Anmeldung:
**05.05.82 Patentblatt 82/18**

(84) Benannte Vertragsstaaten:
**AT BE CH FR GB IT LI NL**

(71) Anmelder: **SIEMENS AKTIENGESELLSCHAFT**
**Postfach 22 02 61**
**D-8000 München 22(DE)**

(72) Erfinder: **Brakus, Bogdan, Dipl.-Ing.**
**Ihleweg 4**
**D-8039 Puchheim(DE)**

(54) Schaltungsanordnung mit einem Wechselrichter zur Speisung eines Wechselstromverbrauchers mit einer alternierenden Spannung, insbesondere einer sinusförmigen Wechselspannung.

(57) Bei einem Wechselrichter zur Speisung von Wechselstromverbrauchern befinden sich im Ausgangskreis im allgemeinen steuerbare stromrichtungsabhängige Schaltelemente, die entsprechend der gewünschten Frequenz periodisch ein- und ausgeschaltet werden. Infolge der Stromabhängigkeit dieser Elemente kann die in kapazitiven oder induktiven Blindanteilen eines komplexen Verbrauchers periodisch gespeicherte Energie nicht zur Quelle zurückfließen, so daß Spannungsüberhöhungen und/oder Verzerrungen der Ausgangswechselspannung auftreten. Zur Vermeidung dieser störenden Erscheinungen ist ein Hilfsbelastungskreis vorgesehen, der durch einen Ist-Soll-Wert-Vergleicher steuerbar ist und dem eigentlichen Lastkreis periodisch zumindest einen Teil der Blindleistung entnimmt.

FIG 1

0050753

SIEMENS AKTIENGESELLSCHAFT
Berlin und München

Unser Zeichen
VPA   80 P 6 2 0 0 E

Schaltungsanordnung mit einem Wechselrichter zur Speisung eines Wechselstromverbrauchers mit einer alternierenden Spannung, insbesondere einer sinusförmigen Wechselspannung

Die Erfindung betrifft eine Schaltungsanordnung der im Gattungsbegriff des Patentanspruches 1 beschriebenen Art.

Das Einsatzgebiet für Wechselrichter ist allgemein bekannt: Sie dienen zur Erzeugung alternierender Spannungen, insbesondere sinusförmiger Wechselspannungen aus einer Gleichspannung (Batterie). Mit ihrer Hilfe können Verbraucher, die entweder ausschließlich mit Wechselspannung betrieben werden können, z.B. Motoren, oder deren serienmäßige Auslegung für Wechselstrombetrieb nicht geändert werden kann oder soll, bei Netzausfall oder in Einsatzfällen, bei denen ein Netzanschluß nicht zur Verfügung steht, aus einer Batterie gespeist werden.

Der derzeitige Stand der Technik von Wechselrichtern sehr hohen Wirkungsgrades ist beispielsweise in der Zeitschrift "ERICSSON Review" Nr. 1, 1979 S. 34 ff sowie in der Zeitschrift "Electronics", August 2, 1979, S. 119 und Dezember 6, 1979, Seite 69 und 70 ausführlich beschrieben. Diese bekannten Wechselrichter enthalten einen sogenannten Umrichter, der als Sperrwandler oder als Ein- oder Gegentaktdurchflußwandler ausgebildet ist, mit einer im Vergleich zur Frequenz der gewünschten alternierenden Spannung wesentlich höheren Frequenz schwingt und durch ein der gewünschten alter-

Wf 1 Gru / 13.10.1980

nierenden Spannung entsprechendes aus einem Referenzoszillator abgeleitetes Modulationssignal, insbesondere
in Pulsbreitenmodulation, modulierbar ist. In die Verbindung zwischen dem Umrichter und dem Wechselstrom-verbraucher sind im allgemeinen steuerbare stromrichtungsabhängige Schaltelemente (z.B. Thyristoren) eingefügt,
durch deren alternative Ansteuerung die gewünschte alternierende Spannung aus aufeinanderfolgenden Halbwellen zusammensetzbar ist.

Schaltungsanordnungen der vorangehend beschriebenen Art
können wegen der erwähnten stromrichtungsabhängigen
Schaltelemente Energie ausschließlich in einer Richtung
übertragen. Falls der zu speisende Wechselstromverbraucher eine komplexe Last darstellt, ergeben sich Verzerrungen der alternierenden Spannung, die von der in Reaktanzanteilen des Lastwiderstandes periodisch gespeicherten Energie herrühren. Bekanntlich muß die in den nichtohmschen Komponenten eines Lastwiderstandes periodisch
gespeicherte Energie periodisch wieder abgebaut, d.h.
entweder vernichtet, zur Quelle zurückgeführt oder anderweitig verwendet werden. Die gespeicherte Energie bewirkt, daß die Ausgangsspannung über den Sollwert der
gewünschten alternierenden Spannung hinaus ansteigt. In
induktiven Blindwiderständen gespeicherte magnetische
Energie verursacht einen Spannungsüberschuß während der
ansteigenden Flanke des Sollwertes, während in kapazitiven Widerstandsanteilen gespeicherte elektrische Energie einen Spannungsüberschuß während der fallenden
Flanke des Sollwertes verursacht. Letzteres betrifft
insbesondere auch die Siebkondensatoren des Wechselrichters.

Es ist bekannt und üblich, konstante kapazitive oder
induktive Blindleistung durch entsprechend dimensionierte duale Bauelemente zu kompensieren (Resonanzabstimmung). Eine solche Resonanzabstimmung ist jedoch nur für die Grundwelle der alternierenden Spannung möglich.

Es ist auffallend, daß bei den in dem oben erwähnten Stand der Technik beschriebenen Wechselrichtern das Problem komplexer Lastwiderstände praktisch nicht angesprochen wird, d.h. es wird dort offensichtlich ohmsche Last vorausgesetzt bzw. eine Erhöhung des Klirrfaktors hingenommen. Die gezielte Lastkompensation durch Resonanzabstimmung hat außer der Tatsache, daß sie nur für die Grundwelle möglich ist, den Nachteil, daß sie nur für einen gegebenen Belastungswert zutrifft, so daß die entsprechenden Geräte nicht universell einsetzbar sind, es sei denn, daß die kompensierenden Elemente stark überdimensioniert sind. Dabei sind der Platzbedarf und das Gewicht der Bauteile von Nachteil.

Der Erfindung liegt die Aufgabe zugrunde, eine Schaltungsanordnung der im Gattungsbegriff der im Patentanspruch 1 beschriebenen Art in der Weise weiter zu bilden, daß die gewünschte alternierende Spannung unabhängig von der Belastungsart den gewünschten zeitlichen Verlauf aufweist. Außerdem sollen die in den Speisestromkreis eingefügten steuerbaren stromrichtungsabhängigen Schaltelemente von den durch die Blindleistung verursachten Spannungsspitzen entlastet werden.

Diese Aufgabe wird durch eine Schaltungsanordnung mit den im Patentanspruch 1 genannten Merkmalen gelöst.

Erfindungsgemäß ist dem Wechselstromverbraucher also ein Hilfsbelastungskreis parallel geschaltet, der bei Abweichungen der an dem Verbraucher auftretenden Ist-Spannung von der gewünschten Soll-Spannung wirksam wird und der den entsprechenden Spannungsüberschuß beseitigt bzw. auf ein Maß reduziert, das einem tolerierbaren Klirrfaktor entspricht.

Vorteilhafte Ausgestaltungen und Weiterbildungen der Erfindung sind Gegenstand der Unteransprüche, auf die hiermit zur Verkürzung der Beschreibung ausdrücklich verwiesen wird. Eine dieser Weiterbildungen ermöglicht es, die von dem Hilfsbelastungskreis ausgenommene Energie zu der Speisequelle (Batterie) zurückzuführen. Zu diesem Zweck ist der Hilfsbelastungskreis seinerseits als Teil eines Umrichters ausgebildet, dessen Ausgangsspannung nach Gleichrichtung der Speisequelle zugeführt werden kann.

Das steuerbare Schaltelement, mittels dessen der Hilfsbelastungskreis einschaltbar ist, kann so angeordnet sein, daß es während einer Halbwelle der gewünschten alternierenden Spannung wiederholt zwischen seinem leitenden und seinem nichtleitenden Zustand umgesteuert wird. Diese Umsteuerung kann entweder freischwingend erfolgen, indem im Steuerkreis dieses Schaltelementes wirksame Zeitglieder die Einschaltzeit begrenzen, sie kann jedoch auch fremdgesteuert sein, wobei die Fremdsteuerung vorzugsweise aus der vergleichsweise hohen Frequenz des eingangs genannten Umrichters abgeleitet ist.

Der Hilfsbelastungskreis ist vorzugsweise über eine Vollweg-Gleichrichterbrücke mit dem eigentlichen Wechselstromverbraucher verbunden. Dies hat den Vorteil, daß der Hilfsbelastungskreis und insbesondere das Schaltelement zu seiner periodischen Einschaltung stromrichtungsabhängig sein können, da ihnen die beiden Halbwellen der alternierenden Verbraucherspannung infolge der Vollweg-Gleichrichtung stets mit derselben Polarität angeboten werden.

Im folgenden sei die Erfindung anhand der Zeichnungen näher erläutert:

Fig. 1 zeigt das Prinzipschaltbild eines ersten Ausführungsbeispieles der Erfindung, bei dem der Hilfsbelastungskreis von der gesteuerten Strecke eines
linearen steuerbaren Schaltelementes, z.B. der
Emitter-Kollektor-Strecke eines Transistors mit
linearer Eingangs-Ausgangscharakteristik gebildet ist,

Fig. 2 zeigt einige Zeitdiagramme zur Verdeutlichung
des der Erfindung zugrunde liegenden Problems
und seiner Lösung,

Fig. 3 zeigt ein weiteres Ausführungsbeispiel der Erfindung, bei dem der Hilfsbelastungskreis einen vorzugsweise ohmschen Widerstand enthält, der durch
ein steuerbares Schaltelement mit Schaltercharakteristik während jeder Halbwelle zu kompensierenden Spannung wiederholt ein- und ausschaltbar
ist,

Fig. 4 zeigt Zeitdiagramme zur Erläuterung des Ausführungsbeispieles gemäß Fig. 3,

Fig. 5 zeigt ein weiteres Ausführungsbeispiel der Erfindung, bei dem der in dem Hilfsbelastungskreis
wirksame Verbraucher Bestandteil eines Umrichters ist, dessen Ausgangsleistung zu der Speisequelle zurückführbar ist,

Fig. 6 zeigt ein schematisches Prinzipschaltbild für
einen allgemeinen Einsatz der elektronischen
Blindlastkompensation gemäß der Erfindung.

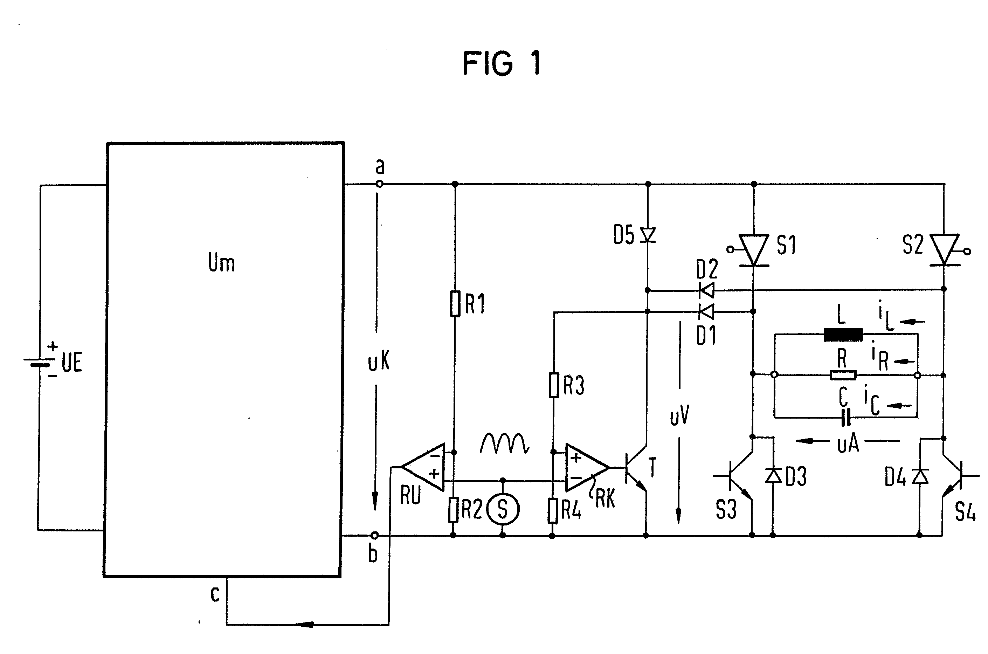

Die in Fig. 1 dargestellte Schaltung besteht aus einem
Umrichter Um, der aus einer Gleichspannungsquelle UE gespeist ist. Der Umrichter Um ist ein sogenannter modulierbarer Umrichter, d.h. seine mit uk bezeichnete an
den Klemmen a und b auftretende Ausgangsspannung ändert
ihre Amplitude in Abhängigkeit von einem Modulationssignal, das dem mit c bezeichneten Modulationseingang zugeführt wird. Der Umrichter Um enthält einen elektronischen Zerhacker, der mit einer im Vergleich zur Frequenz des Modulationssignals hohen Impulsfrequenz schwingt. Die Modulation ist vorzugsweise eine Pulsbreitenmodulation, d.h. die Breite der Zerhackerimpulse wird nach Maßgabe des Modulationssignals verändert.

Das Modulationssignal wird von einem Referenzoszillator geliefert, der im vorliegenden Beispiel eine sinusförmige Spannung liefert, deren Frequenz derjenigen der gewünschten Ausgangsspannung entspricht. Der Referenzoszillator ist Bestandteil der symbolisch mit s bezeichneten Quelle. Das Ausgangssignal dieser Quelle ist eine zweiweggleichgerichtete Sinusspannung. Diese Spannung wird dem ersten Eingang eines mit RU bezeichneten Komparators zugeführt. An dem zweiten Eingang dieses Komparators RU liegt eine Teilspannung der Ausgangsspannung Uk an, die an einem aus den Widerständen R1 und R2 bestehenden Spannungsteiler gewonnen wird. Dieser Spannungsteiler und der Komparator RU sind Bestandteil eines Regelkreises, durch den die Ausgangsspannung uk des Umrichters Um derart geregelt wird, daß sie der Ausgangsspannung der Quelle s folgt.

Die Ausgangsspannung uk hat dementsprechend ebenfalls den Verlauf einer kommutierten Sinuskurve. Die Ausgangsspannung uk wird durch eine aus zwei Thyristoren S1 und S2 und zwei Transistoren S3 und S4 bestehende Brückenschaltung periodisch derart umgepolt, daß jede zweite Halbwelle kommutiert und somit eine kontinuierliche Sinusschwingung zusammengesetzt wird. Die periodische Ansteuerung der Thyristoren S1 und S2 sowie der Transistoren S3 und S4 erfolgt in nicht näher dargestellter Weise mit Hilfe von Steuersignalen, die aus dem erwähnten Referenzoszillator abgeleitet werden.

Der von der Anordnung zu speisende Wechselstromverbraucher sei ein komplexer Lastwiderstand, der aus dem ohmschen Widerstand R, der Induktivität L und der Kapazität C besteht. Die an dem Lastwiderstand auftretende Spannung ist mit uA bezeichnet. Die durch die einzelnen Komponenten fließenden Ströme sind mit iR, iL bzw. iC bezeichnet.

Die Schaltung beinhaltet ferner einer aus den die Dioden D1, D2, D3 und D4 bestehende Gleichrichterbrücke, deren Ausgangsspannung mit uv bezeichnet ist. Der Ausgang dieser Gleichrichterbrücke ist mit der Kollektor-Emitter-Strecke eines Transistors T belastet. Die Basis dieses Transistors T ist mit dem Ausgang eines weiteren Komparators RK verbunden, an dessen Eingängen die Spannung der Quelle s bzw. ein Teil der Spannung uv anliegen. Letztere wird durch einen aus Widerständen R3 und R4 bestehenden Spannungsteiler gewonnen.

Zusätzlich zu der aus den Dioden D1 bis D4 bestehenden Gleichrichterbrücke ist eine Diode D5 vorgesehen, die die Ausgangsklemme a des Umrichters Um unmittelbar mit dem den Transistor T enthaltenden Hilfsbelastungskreis verbindet. Über diese Diode D5 ist auch der in dem Umrichter Um enthaltene Siebkondensator in die Blindlastkompensation einbezogen.

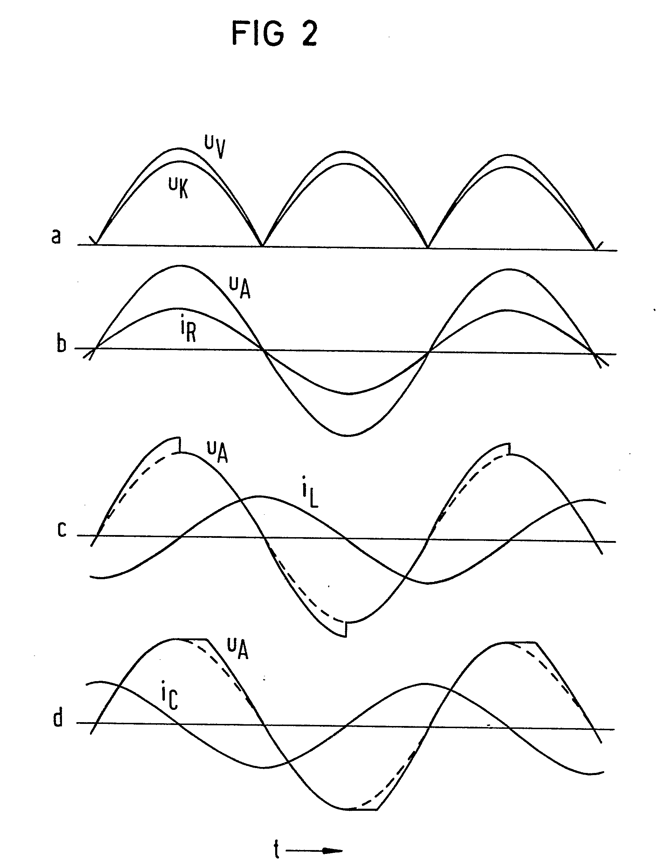

Im folgenden sei die Funktion der in Fig. 1 dargestellten Schaltung unter Bezugnahme auf die in Fig. 2 gezeigten Zeitdiagramme näher erläutert:

An den Ausgangsklemmen a und b des Umrichters Um erscheint eine Ausgangsspannung uK, deren zeitlicher Verlauf infolge der Regelung über den Komparator RU im wesentlichen der "Soll-Spannung" der Quelle s entspricht. In dem Komparator RK wird auch die durch Gleichrichtung aus der Ausgangsspannung uA abgeleitete Spannung uv mit dieser Soll-Spannung verglichen. Der Regelkreis mit dem Komparator RK ist so eingestellt, daß der Transistor T dann leitend wird und den Blindstrom der kapazitiven oder induktiven Komponenten C bzw. L des Lastwiderstandes übernimmt, wenn die Spannung uv die Soll-Spannung überschreitet. Dabei wird der Energieüberschuß in dem Transistor T verbraucht, derart daß die Spannung uv während des betreffenden Bereiches der Halbwelle der Soll-Spannung folgt. Die Spannung uA an dem Lastwiderstand erhält dadurch die gewünschte Sinusform mit einer durch den Abstand der in Fig. 2a dargestellten Kurven uv und uK gegebenen Verzerrung. Dieser Spannungsabstand ist in den Kurven von Fig. 2 zum besseren Verständnis vergleichsweise groß dargestellt. In der Praxis ist er jedoch so klein, daß der sich ergebende Klirrfaktor einen vorbestimmten Wert nicht überschreitet. Fig. 2b zeigt den Verlauf des Stromes iR und der Spannung uA bei einer rein ohmschen Belastung. Man sieht, daß beide Kurven gleichphasig verlaufen und keine Verzerrung der Ausgangsspannung uA auftritt. In Fig. 2c sind die entsprechenden Kurven für eine rein induktive Last dargestellt. Bei einer solchen rein induktiven Last ist in der Induktivität L nach jedem Nulldurchgang der Spannung uA eine magnetische Energie gespeichert, deren Wert dem Quadrat des Scheitelwertes des Stromes iL und der halben Induktivität L proportional ist. Diese magnetische Energie führt zu einer Erhöhung der Ausgangsspannung uA bis auf den durch die Spannung uV gegebenen Wert. Beim Nulldurchgang des Stromes iL ist die magnetische Energie restlos verbraucht, so daß die Ausgangsspannung uA wieder auf den Wert von uK zurückfällt.

Wenn der Lastwiderstand rein kapazitiv ist (Fig. 2d) und die Ausgangsspannung uA ihren Scheitelwert erreicht, ist in dem Lastwiderstand elektrische Energie gespeichert, deren Wert dem Quadrat des Scheitelwertes der Spannung uA und der halben Kapazität C proportional ist. Diese elektrische Energie kann sich - (wie im Fall der induktiven Belastung die magnetische Energie) - nicht über die stromrichtungsabhängigen Schaltelemente S1 bis S4 entladen. Sie versucht daher, die Spannung uA auf dem Scheitelwert zu halten, bis die Regelung durch den Hilfsbelastungskreis wirksam wird (Fig. 2d).

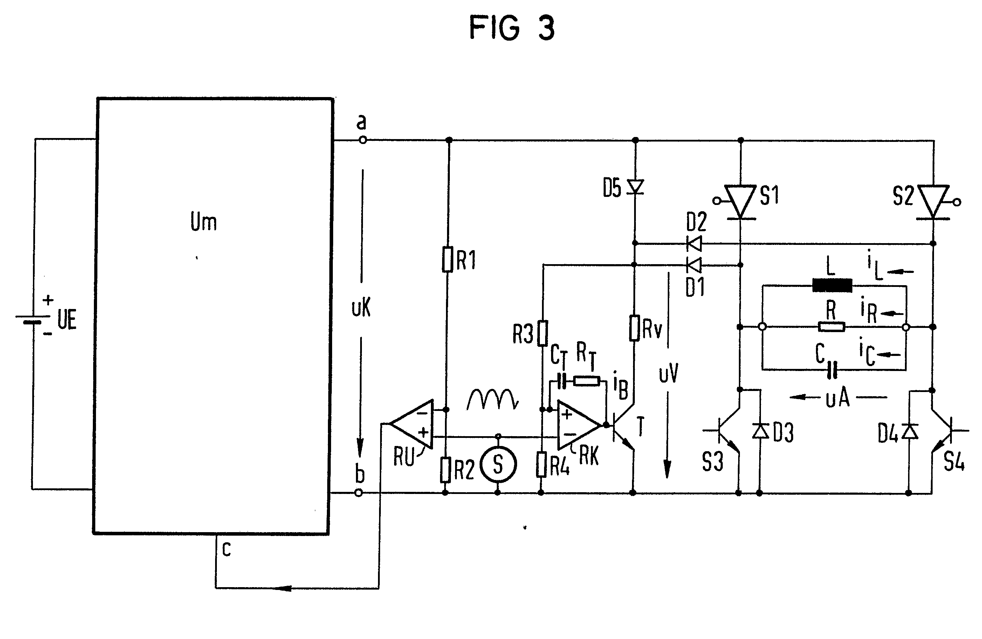

Das in Fig. 3 dargestellte Ausführungsbeispiel der Erfindung unterscheidet sich von der Schaltung gemäß Fig.1
dadurch, daß der Hilfsbelastungskreis nicht ausschließlich von der Kollektor-Emitter-Strecke eines Transistors
gebildet wird sondern einen Widerstand Rv enthält, so
daß die überschüssige Leistung nicht ausschließlich in
dem Transistor T in Verlustwärme umgesetzt wird. Im übrigen sind die in der Schaltung gemäß Fig. 3 verwendeten Bauteile mit den gleichen Bezugzeichen versehen wie
die gleichen oder gleichwirkenden Teile in Fig. 1.

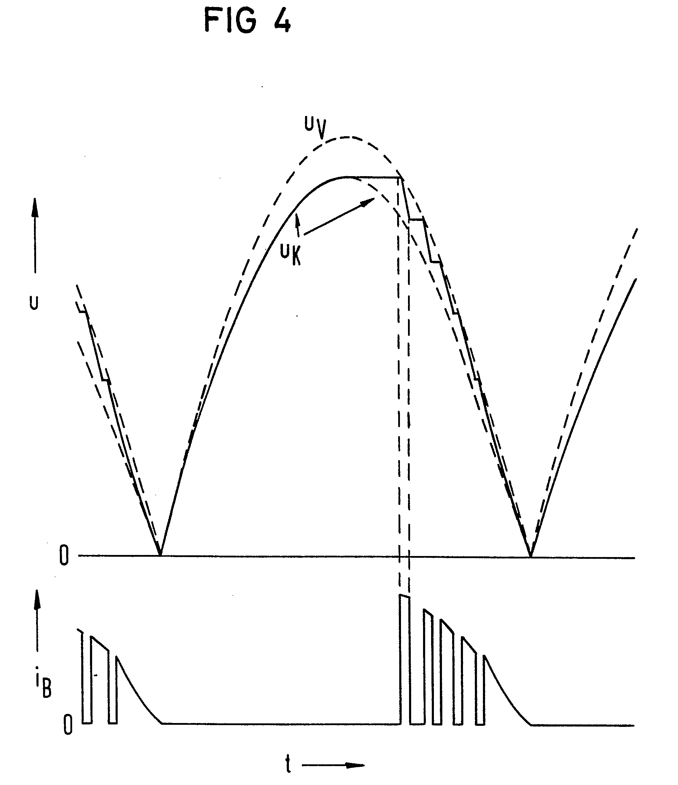

Der Transistor T in Fig. 3 stellt einen Schalter dar,
der eine sehr geringe Verlustleistung besitzt. Dieser
Transistor T wird während des Regelvorganges mit einer
vergleichsweise hohen Frequenz ein- und ausgeschaltet.
Der zeitliche Verlauf der entsprechenden Spannungen uv
und uK sowie des durch den Transistor T fließenden
Stromes, der mit iB bezeichnet ist, ist in Fig. 4 dargestellt.

Die in Fig. 3 dargestellte Schaltung arbeitet in folgender Weise: Sobald die Spannung uA "zu hoch" wird, wird
der Transistor T eingeschaltet. Infolgedessen sinkt die
Spannung uA unter den Sollwert und der Transistor T
wird wieder ausgeschaltet. Um die Frequenz dieses Ein-
und Ausschaltvorganges zu verkleinern und die mit dem
Umschalten verbundenen Verluste zu verringern, ist zwischen dem Ausgang des Komparators RK und seinem mit der
Spannung uV verbundenen Eingang ein Zeitglied als Rückkopplungszweig eingefügt, das aus einem Widerstand RT
und einem Kondensator CT besteht. Dadurch wird die Dauer
der einzelnen Schaltzustände auf einen vorbestimmten
Wert verlängert und die maximale Schaltfrequenz entsprechend begrenzt.

Wie aus Fig. 4 erkennbar ist, wird die gewünschte Sinusform durch eine Treppenkurve angenähert. Bei überwiegend induktiver Last ist am Ausgang ein Glättungskondensator erforderlich, der in den Schaltpausen des Transistors T den induktiven Strom aufnehmen kann.

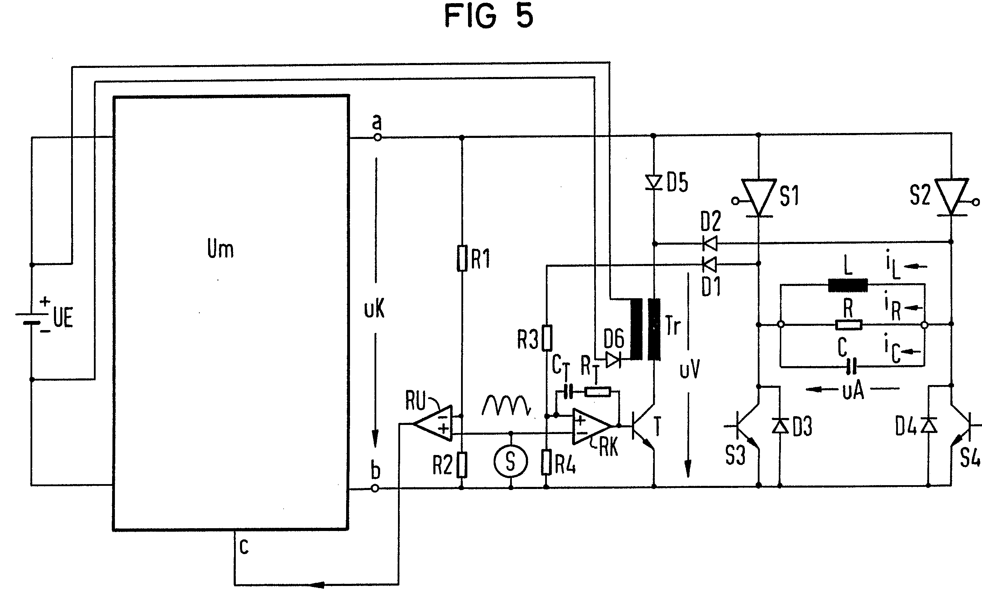

Fig. 5 zeigt ein Ausführungsbeispiel der Erfindung, bei dem die von dem Hilfsbelastungskreis aufgenommene Energie zu der Speisequelle UE zurückgeführt wird. Zu diesem Zweck ist der Lastwiderstand Rv von Fig. 3 durch die Primärwicklung eines Transformators Tr ersetzt. Dieser Transformator Tr ist Bestandteil eines Sperrwandlers, der mit der Ein- und Ausschaltfrequenz des Transistors T schwingt. Die auf die Sekundärseite dieses Transformators Tr übertragene Spannung wird mit Hilfe einer Diode D6 gleichgerichtet und während der Sperrphase in die Quelle UE zurückgespeist. Anstelle des Sperrwandlers können selbstverständlich auch andere Umrichter zur Energierückübertragung verwendet werden.

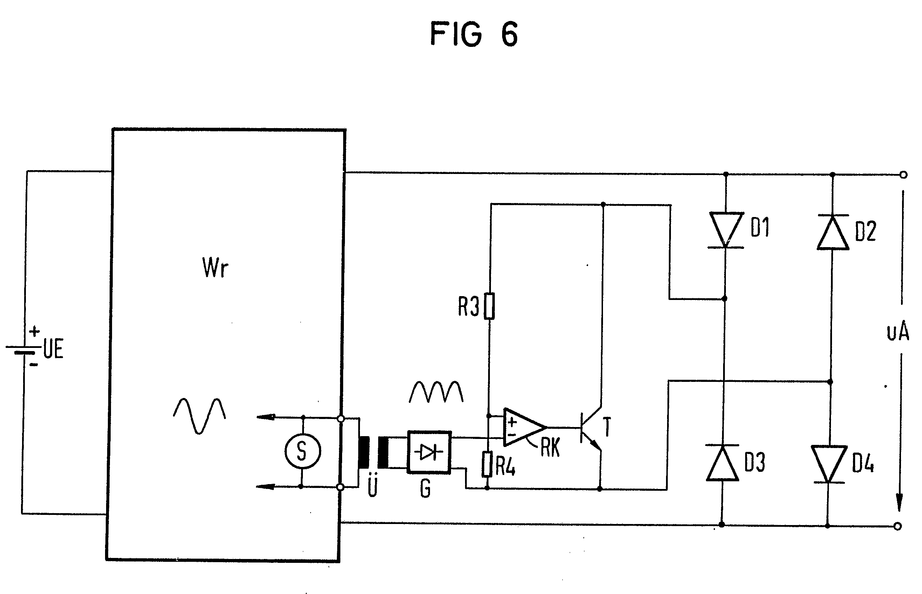

Bei den vorangehend beschriebenen Ausführungsbeispielen bestand der Wechselrichter zur Speisung des Wechselstromverbrauchers aus einem modulierbaren Gleichstromumrichter, dessen Ausgangsspannung uK durch eine Polwenderbrücke zu einer sinusförmigen Spannung zusammengesetzt wird. Die erfindungsgemäße Anordnung zur Blindlastkompensation ist nicht auf derartige Wechselrichter beschränkt sondern läßt sich bei Wechselrichtern beliebiger Bauart verwenden. Fig. 6 zeigt ein entsprechendes Prinzipschaltbild. Gleiche oder gleichwirkende Bauteile sind wieder mit denselben Bezugszeichen versehen wie in den vorangehenden Figuren. Der verwendete Wechselrichter ist mit Wr bezeichnet. Es handelt sich beispielhaft jedoch nicht notwendigerweise um einen fremdgesteuerten Wechselrichter, d.h. die Frequenz seiner Ausgangsspannung uA ist durch eine Referenzquelle s gegeben. Die Spannung dieser Referenzquelle s wird über einen Über-

trager Ü abgegriffen und in einem Vollweggleichrichter
G gleichgerichtet. Die am Ausgang dieses Gleichrichters
G auftretende gleichgerichtete Sinusspannung dient wieder als Sollspannung und liegt an dem entsprechenden
Eingang des Komparators RK an. Im übrigen gleicht die
Funktion der Schaltung gemäß Fig. 6 derjenigen der in
Fig. 1 dargestellten Schaltung. Selbstverständlich kann
der Hilfsbelastungskreis, der im gezeichneten Beispiel
wieder aus der Kollektor-Emitter-Strecke des Transistors
T besteht, in gleicher Weise ausgebildet sein, wie bei
den Schaltungen gemäß Fig. 3 oder 5.

6 Patentansprüche
6 Figuren

Patentansprüche

1. Schaltungsanordnung mit einem Wechselrichter zur Speisung eines Wechselstromverbrauchers mit einer alternierenden Spannung, insbesondere einer sinusförmigen Wechselspannung, aus einer Gleichspannungsquelle, mit in dem Laststromkreis wirksamen stromrichtungsabhängigen Schaltelementen, die eine Rückspeisung von in kapazitiven oder induktiven Komponenten des Wechselstromverbrauchers gespeicherter magnetischer bzw. elektrischer Energie in den Wechselrichter verhindern, d a d u r c h   g e k e n n z e i c h n e t ,
- daß dem Wechselstromverbraucher ein durch ein steuerbares Schaltelement (T) einschaltbarer Hilfsbelastungskreis parallel geschaltet ist,
- und daß die Steuerelektrode dieses steuerbaren Schaltelementes (T) mit dem Ausgang eines Spannungsvergleichers (RK) verbunden ist, dessen Eingängen ein aus der an dem Wechselstromverbraucher wirksamen Spannung abgeleitetes Ist-Signal (uV) sowie ein aus der Ausgangsspannung des Wechselrichters oder einem den Wechselrichter steuernden Referenzoszillator abgeleitetes Soll-Signal zugeführt werden, derart daß das steuerbare Schaltelement (T) in seinen leitenden Zustand gesteuert wird, wenn die an dem Wechselstromverbraucher wirksame Spannung infolge des Freiwerdens von in Blindwiderstandsanteilen gespeicherter elektrischer oder magnetischer Energie den Augenblickswert des genannten Soll-Signals dem Betrag nach überschreitet.

2. Schaltungsanordnung nach Anspruch 1, wobei der Wechselrichter einen Umrichter beinhaltet, der mit einem der gewünschten alternierenden Spannung entsprechenden Modulationssignal, insbesondere in Pulsbreitenmodulation, modulierbar ist sowie mit einem Referenzoszillator, aus dessen Signalspannung das genannte Modulationssignal abgeleitet ist und wobei die genannten stromrichtungsabhängigen Schaltelemente steuerbare Schaltelemente (z.B.
Thyristoren) sind, durch deren alternative Ansteuerung
die gewünschte alternierende Spannung durch Umpolung
aus aufeinanderfolgenden Halbwellen der Ausgangsspannung des Umrichters zusammensetzbar ist, d a d u r c h
g e k e n n z e i c h n e t , daß das dem Spannungsvergleicher (RK) zugeführte Soll-Signal dem genannten Modulationssignal entspricht.

3. Schaltungsanordnung nach Anspruch 1 oder 2, d a -
d u r c h g e k e n n z e i c h n e t , daß das in dem
Hilfsbelastungskreis angeordnete steuerbare Schaltelement (T) ein stromrichtungsabhängiges Schaltelement
(z.B. ein Transistor) ist und daß der Hilfsbelastungskreis über eine Vollweggleichrichterbrücke (D1 bis D4)
mit der zu speisenden Last verbunden ist.

4. Schaltungsanordnung nach einem der Ansprüche 1 bis 3,
d a d u r c h g e k e n n z e i c h n e t , daß in dem
Hilfsbelastungskreis in Reihe mit dem steuerbaren
Schaltelement (T) ein Verbraucher (Rv) angeordnet ist
und daß das steuerbare Schaltelement (T) während einer
Halbwelle der alternierenden Spannung wiederholt zwischen seinem leitenden und seinem nichtleitenden Zustand
umgesteuert wird (Fig. 4).

5. Schaltungsanordnung nach Anspruch 4, d a d u r c h
g e k e n n z e i c h n e t , daß die für die wiederholte Umsteuerung des steuerbaren Schaltelementes (T)
maßgebende Schaltzeit durch ein Zeitglied (CT, RT) bestimmt ist, welches als Rückkopplungszweig zwischen den
Ausgang und einen Eingang des Spannungsvergleichers (RK)
geschaltet ist.

6. Schaltungsanordnung nach einem der vorhergehenden
Ansprüche, d a d u r c h g e k e n n z e i c h n e t ,

daß der in dem Hilfsbelastungskreis wirksame Energieverbraucher Bestandteil eines Gleichspannungswandlers(T,
Tr, D6) ist, dessen Ausgang mit der Gleichspannungsquelle (UE) verbunden ist.

FIG 1

0050753

FIG 2

FIG 3

3/6

0050753

4/6

FIG 4

FIG 5

5/6

0050753

FIG 6

6/6

0050753

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich der maßgeblichen Teile | betrifft Anspruch |
|---|---|---|
| A | US - A - 4 048 554 (STICH)<br><br>* Spalte 2, Zeile 59 - Spalte 11, Zeile 27 * | 1-3 |
| A | DE - A - 1 953 341 (JEUMONT SCHNEI-DER)<br><br>* Seite 13, Zeile 5 - Seite 15, Zeile 30 * | 1-3 |
| A | US - A - 3 648 150 (WESTINGHOUSE)<br><br>* Spalte 1, Zeile 55 - Spalte 4, Zeile 4 * | 1 |
| A | EP - A - 0 010 900 (HICKS)<br><br>* Figur 6 * | 6 |
| PX | TELCOM REPORT (SIEMENS), Band 4, Nr. 2, April 1981, Seiten 118-121 Passau, DE.<br>B. BRAKUS: "Getakteter modulierter Wechselrichter für unterbrechungsfreie 50-Hz-Wechselstromversorgung"<br><br>* Insgesamt * | 1-6 |
| P | DE - A - 3 001 751 (LICENTIA)<br><br>* Seite 4, Zeile 16 - Seite 5, Zeile 20 * | 1 |

**KLASSIFIKATION DER ANMELDUNG (Int Cl )**

H 02 M 7/48

**RECHERCHIERTE SACHGEBIETE (Int. Cl.3)**

H 02 M 7/48
7/44
7/515
7/537
H 02 P 13/18
H 02 J 3/40

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 02-02-1982 | BERTIN |

EPA form 1503.1   06.78